# EUROPEAN PATENT SPECIFICATION

(11) **EP 1 837 557 B1**
(45) Date of publication and mention of the grant of the patent: **04.05.2011**
(21) Application number: 06425193.7
(22) Date of filing: 23.03.2006
(51) Int. Cl.: F16H 48/06, B60K 17/16

(54) **Transmission assembly for a motor vehicle**
Getriebeaggregat für Kraftfahrzeuge
Ensemble de transmission pour véhicule automobile

(43) Date of publication of application: 26.09.2007
(73) Proprietor: ELASIS - Società Consortile per Azioni, 80038 Pomigliano d'Arco (IT)
(72) Inventor: Gatti, Giovanni, 80038 Pomigliano d'Arco (IT); Feola, Domenico, 80038 Pomigliano d'Arco (IT)
(74) Representative: Jorio, Paolo

(56) References cited:
- WO-A-86/02419
- WO-A-03/106247
- US-A- 2 720 797
- US-A1- 2004 018 909

## Description

The present invention relates to a transmission assembly for a motor vehicle.

As known, a transmission assembly comprising a gearbox and a differential arranged in series is envisaged to transmit motion from the endothermic engine to the drive wheels of a motor vehicle.

The gearbox comprises a driven output shaft and a primary, or drive, shaft which is rotably fed by the output shaft of the endothermic engine by means of a clutch and is coupled to the output shaft of the gearbox by means of gears, which define a plurality of transmission ratios selectable and shiftable by the motor vehicle driver.

The differential receives motion from the gearbox output shaft and transmits it to a pair of drive axles which rotably feed the drive wheels. In particular, the differential is arranged in an oil bath inside a fixed casing and comprises a supporting box, usually of cast iron, which has two reciprocally opposite openings crossed by the ends of the two drive axles and carries an external crown, in relative fixed position.

The crown has an external gearing meshing with a pinion, which is integral with the gearbox output shaft: the meshing between crown and pinion defines a speed reduction ratio and allows to rotably feed the supporting box about the axis defined by the two drive axles.

Finally, the supporting box accommodates an planetary gear set comprising a pair of satellite gears, a pair of planetary gears meshing with the satellite gears and a satellite gear carrier, whose ends are coupled to respective anchoring portions of the supporting box. The satellite gear carrier extends in the direction orthogonal to the drive axles, turns along with the supporting box, while each of the planetary gears is mounted, in fixed angular position, onto the end of a respective drive axle to rotationally feed it.

When the rotation axes of the crown and the pinion are reciprocally parallel, this transmission arrangement makes the supporting box of the differential turn in direction opposite to that of the gearbox output shaft and, therefore, in the same direction as the primary shaft of the gearbox and of the endothermic engine output shaft.

US 2004/018909 A1, which shows the features of the preamble of claim 1, discloses a planetary gear apparatus, which has an external ring gear coupled to an input shaft by means of an intermediate shaft. The intermediate shaft has a bevel gear meshed with the external ring gear and with a bevel gear of the input shaft. The rotational axes of the input shaft, of the intermediate shaft, and of the external ring gear are in parallel orientation and on a common plane.

WO 86/02419 A discloses a differential assembly fit to operate on transmission systems whose final reduction is carried out by means of drive link chains instead of ring and pinion gears.

US-A-2720797 discloses a differential assembly, which has a pulley for a V-belt instead of the external gear ring.

When the axes of rotation of the crown and the pinion are reciprocally parallel, it is felt the need to arrange the endothermic engine in the engine compartment with orientation turned by 180° (about a vertical axis) with respect to the position envisaged for the same endothermic engine in motor vehicles previously designed and/or available on the market, in order to optimise the layout of the various components in the engine compartment and therefore to minimise dimensions.

However, by orienting the endothermic engine turned by 180°, changes are required to ensure the correct direction of rotation of the drive wheels of the motor vehicle.

Similarly, it is felt the need to design motor vehicles from scratch in which the endothermic engine may be arranged in either position turned by 180° (about a vertical axis) with respect to the other, while maintaining the same rotation direction of the drive wheels.

It is the object of the present invention to make a transmission assembly of a motor vehicle, which allows to simply and cost-effectively respond to the aforementioned needs, by modifying as least as possible the components which are used in standard fashion in motor vehicles, in particular the endothermic engine and the gearbox, and which preferably allows to reduce the dimensions and not to worsen the noise while running.

According to the present invention it is made a transmission assembly for a motor vehicle comprising:
- a gearbox comprising a motion output shaft;
- a differential comprising a crown coupled to a terminal portion of said output shaft to receive motion from said gearbox;
- motion reversing means which reciprocally connect said crown and said terminal portion to make said output shaft and said crown turn in the same rotation direction;
characterised in that said crown and said terminal portion are interchangeable with a toothed crown and a terminal geared portion respectively and directly meshing with the same transmission ratio.

Conveniently, said motion reversion means comprise a drive belt or chain wrapped about said crown and said terminal portion.

For a better understanding of the present invention, a preferred embodiment will now be described only by way of non-limitative example, with reference to the accompanying drawings, which shows in perspective and with parts removed for clarity, a preferred embodiment of the transmission assembly of a motor vehicle according to the present invention.

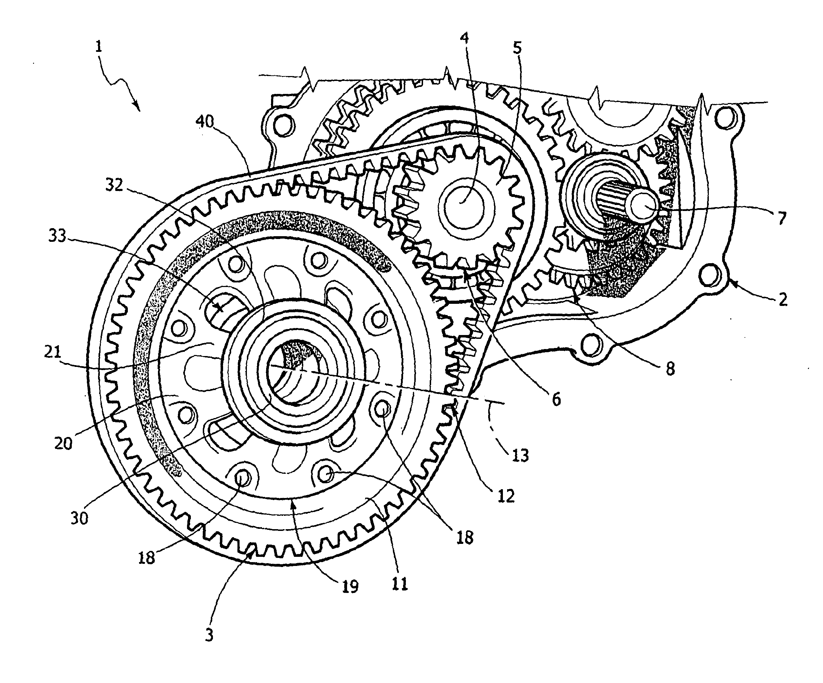

In the accompanying figure, number 1 indicates, as a whole, a transmission assembly of a motor vehicle (partially shown).

Assembly 1 comprises a gearbox 2 and a differential 3 reciprocally coupled in series. The gearbox 2 comprises a driven output shaft 4, whose end carries, in relatively fixed and coaxial position, a spool or external toothed pulley, indicated by the number 5.

The gearbox 2 also comprises a primary or driven shaft 7 which is rotably fed by the output shaft of an endothermic engine (not shown) via a clutch (not shown) and is coupled to the shaft 4 via gears 8 (partially shown), which define a plurality of transmission ratios selectable and shiftable by the motor vehicle driver.

The differential 3 receives motion from the spool 5 and transmits it to a pair of drive axles (not shown), which rotatably feed the drive wheels (not shown) of the motor vehicle, is accommodated within a supporting casing (not shown) and comprises a crown 11 made of steel.

The crown 11 turns about an axis 13 thereof, coinciding with the axis of the two drive axles and parallel to the rotation axis of the spool 5 and of the shaft 4.

The crown 11 has a plurality of holes 18, which are parallel to axis 13, are angularly and reciprocally spaced out and allow to connect a protection box 19. The box 19 comprises two half shells 20 (of which only one is visible) arranged on opposite axial sides of the crown 11 and fastened to the crown 11 itself by means of screws or other fastening members (not shown).

The two half shells 20 comprise respective housing portions 21 defining a cavity which houses a planetary gear set 33 (not visible) of the type comprising two reciprocally meshing satellites and two planetary gears. In particular, the satellite gears are reciprocally coaxial and carried by a pin, orthogonal to axis 13 and supported directly by crown 11, while the planetary gears are reciprocally coaxial about axis 13 and are fitted in angularly fixed position each on the end of the respective drive axle.

The half shells 20 end with respective cylindrical shanks 30, which extend along axis 13 in reciprocally opposite directions and are axially hollow to allow passage with clearance of the ends of the drive axles. The shanks 30 are coupled by respective bearings 32 to the aforesaid supporting casing, so as to allow crown 11 and box 19 to turn about axis 13.

Crown 11 and spool 5 have respective external gearings 12, 6, which are radially and reciprocally spaced out and are defined by cylindrical teeth with straight teeth having an involute profile. A transmission member 40 is envisaged to reverse the motion with respect to a hypothetical condition where are envisaged a directly and reciprocally meshing crown and pinion, and to allow to turn the crown 11 in the same rotation direction of the shaft 4.

In the solution shown, the transmission member 40 is defined by a drive belt or chain wound about both gearings 6, 12 to transmit motion from the spool 5 to the crown 11.

According to a variant (not shown), the transmission member is defined by a single cylindrical transmission gear which is idly hinged to a fixed position with respect to the above-mentioned supporting casing, is arranged between the crown 11 and the spool 5 and meshes with crown 11 and spool 5 themselves. In this case, the meshing gearings could be helical.

During design, it is possible to choose whether to use assembly 1 in the configuration described above, in which transmission member 40 is envisaged, or whether to use the same gearbox 2 and the same endothermic engine mentioned above in a different configuration, of traditional type, in which the differential crown directly meshes a pinion fitted on the end of the shaft 4.

It is therefore possible to choose whether to arrange the endothermic engine with the gearbox 2 in either position turned by 180° one respect to the other (about a vertical axis), each associated to a respective above-mentioned configuration, maintaining unchanged the rotation direction of the motor vehicle drive wheels. At the same time, it is possible to maintain the same transmission ratio, in the two above-mentioned configurations, between the shaft 4 and the differential box 19, by appropriately selecting the diameters of the differential crowns 11 and of the pinion/spool fitted on the end of the shaft 4.

In this case, for the two configurations which may be chosen, it is only necessary to exchange the crowns 11 of different diameter, to exchange the spool/pinion of different diameter, and to fit the transmission member 40 or not, while the other components of assembly 1 and the endothermic engine remain unchanged.

It is then apparent that, thanks to the transmission member 40, in previously designed motor vehicles, the position of the endothermic engine may be redesigned with a 180° rotation about a vertical axis with respect to the previous position, when the axes of rotation of the differential crown and the shaft 4 are reciprocally parallel, with minimum changes to components.

Indeed, it is necessary only to replace the pinion fitted on shaft 4 with spool 5, to replace the crown and, in case, the differential box, fitting the crown 11 and fitting transmission member 40, while the previously used endothermic engine and the gearbox 2 remain unchanged from a constructive point of view.

It is therefore apparent that the transmission member 40 maintains unchanged the rotation direction of the drive wheels and at the same time avoids additional interventions and/or transmissions to be introduced in the gears 8 inside the gearbox and/or to be introduced between the endothermic engine and the gearbox 2.

The fact that the transmission member 40 is defined by a belt or chain shaped so as to complementary couple with involute profile gearings ensures satisfactory quietness.

It is finally apparent that changes and variations can be made to the assembly 1 here described and illustrated without departing from the scope of protection of the present invention, as defined by the accompanying claims.

For example, gearing 6 may be made directly on a portion of the shaft 4.

## Claims

1. A transmission assembly (1) of a motor vehicle comprising:
- a gearbox (2) comprising a motion output shaft (4);
- a differential (3) comprising a crown (11) coupled to a terminal portion (5) of said output shaft (4) to receive motion from said gearbox (2);
- motion reversing means (40) which reciprocally connect said crown (11) and said terminal portion (5) to make said output shaft (4) and said crown (11) turn in the same rotation direction;
**characterised in that** said crown (11) and said terminal portion (5) are interchangeable with a toothed crown and a terminal geared portion respectively and directly meshing with the same transmission ratio.

2. An assembly according to claim 1, **characterised in that** said motion reversing means (40) comprise a drive belt or chain wound about said crown (11) and said terminal portion (5).

3. An assembly according to claim 2, **characterised in that** said crown (11) and said terminal portion (5) comprise respective external cylindrical straight teeth gearings (12, 6) with involute profile.

4. An assembly according to claim 1, **characterised in that** said motion reversion means comprise a single idle transmission gear arranged between said crown (11) and said terminal portion (5) and meshing with gearings of said crown (11) and said terminal portion (5).

## Patentansprüche

1. Getriebeanordnung (1) eines Kraftfahrzeugs mit:
einem Getriebe (2) mit einer Bewegungsausgangswelle (4);
einem Differential (3) mit einem Kranz (11), der mit einem Endabschnitt (5) der Ausgangswelle (4) gekoppelt ist, um eine Bewegung vom Getriebe (2) aufzunehmen;
einer Bewegungsumkehreinrichtung (40), die den Kranz (11) und den Endabschnitt (5) wechselseitig verbindet, um die Ausgangswelle (4) und den Kranz (11) dazu zu bringen, sich in dieselbe Drehrichtung zu drehen;
**dadurch gekennzeichnet, dass** der Kranz (11) und der Endabschnitt (5) mit einem Zahnkranz bzw. einem Endzahnabschnitt austauschbar sind und mit demselben Übersetzungsverhältnis direkt ein Eingriff stehen.

2. Anordnung nach Anspruch 1, **dadurch gekennzeichnet, dass** die Bewegungsumkehreinrichtung (40) einen Antriebsriemen oder eine Kette aufweist, die um den Kranz (11) und den Endabschnitt (5) gewickelt ist.

3. Anordnung nach Anspruch 2, **dadurch gekennzeichnet, dass** der Kranz (11) und der Endabschnitt (5) jeweilige äußere zylindrische Geradzahnverzahnungen (12, 6) mit einem Evolventenprofil aufweisen.

4. Anordnung nach Anspruch 1, **dadurch gekennzeichnet, dass** die Bewegungsumkehreinrichtung ein einzelnes Getriebelosrad aufweist, das zwischen dem Kranz (11) und dem Endabschnitt (5) angeordnet ist und mit Verzahnungen des Kranzes (11) und des Endabschnitts (5) in Eingriff steht.

## Revendications

1. Ensemble de transmission (1) d'un véhicule à moteur comprenant :
- une boîte à engrenages (2) qui comprend un arbre de sortie de mouvement (4) ;
- un différentiel (3) qui comprend une couronne (11) couplée à une partie terminale (5)dudit arbre de sortie (4) de manière àrecevoir un mouvement en provenance de ladite boîte à engrenages (2) ;
- des moyens d'inversion de mouvement (40) qui connectent de manière réciproque ladite couronne (11) et ladite partie terminale (5) de façon à faire tourner ledit arbre de sortie (4) et ladite couronne (11) dans le même sens de rotation ;
**caractérisé en ce que** ladite couronne (11) et ladite partie terminale (5) sont interchangeables avec une couronne dentée et une partie engrenée terminale qui s'engrènent de manière respective et directe avec le même rapport de transmission.

2. Ensemble selon la revendication 1, **caractérisé en ce que** lesdits moyens d'inversion de mouvement (40) comprennent une courroie ou une chaîne d'entraînement enroulée autour de ladite couronne (11) et de ladite partie terminale (5).

3. Ensemble selon la revendication 2, **caractérisé en ce que** ladite couronne (11) et ladite partie terminale (5) comprennent des engrenages à dents droites cylindriques extérieures respectives (12, 6) qui présentent un profil à développante.

4. Ensemble selon la revendication 1, **caractérisé en ce que** lesdits moyens d'inversion de mouvement comprennent un seul engrenage de transmission fou disposé entre ladite couronne (11) et ladite partie terminale (5) et s'engrenant avec lesdits engrenages de ladite couronne (11) et de ladite partie terminale (5).
